# EUROPÄISCHE PATENTSCHRIFT

(11) **EP 3 369 289 B1**
(45) Veröffentlichungstag und Bekanntmachung des Hinweises auf die Patenterteilung: **22.07.2020**
(21) Anmeldenummer: 16790905.0
(22) Anmeldetag: 19.10.2016
(51) Int. Cl.: H05B 1/02, H02J 3/26, H02J 3/14

(54) **VERFAHREN ZUR STEUERUNG EINES GARGERÄTS, GARGERÄT UND HEIZELEMENT**
METHOD TO CONTROL A COOKING DEVICE, COOKING DEVICE AND HEATING ELEMENT
MÉTHODE DE CONTRÔLE D'UN DISPOSITIF DE CUISSON, DISPOSITIF DE CUISSON ET ÉLÉMENT CHAUFFANT

(30) Priorität: 28.10.2015 DE 102015118397
(43) Veröffentlichungstag der Anmeldung: 05.09.2018
(73) Patentinhaber: RATIONAL International AG, 9435 Heerbrugg (CH); Rational AG, 86899 Landsberg am Lech (DE)
(72) Erfinder: GLUCK, Pascal, 68390 Sausheim (FR); JUNGHANNS, Annika Katharina, 53121 Bonn (DE); LINGENHEIL, Markus, 79206 Breisach (DE); SCHMIDLIN, Pascal, 68460 Lutterbach (FR)
(74) Vertreter: Prinz & Partner mbB
(86) Internationale Anmeldenummer: PCT/EP2016/075070
(87) Internationale Veröffentlichungsnummer: WO 2017/072002

(56) Entgegenhaltungen:
- EP-A2- 0 980 195
- EP-A2- 2 665 346
- WO-A1-2015/007886
- DE-A1-102011 078 047

## Beschreibung

Die Erfindung betrifft ein Verfahren zur Steuerung eines Gargeräts sowie ein Gargerät.

In Groß- bzw. Profiküchen werden Gargeräte eingesetzt, die oft mehr als eine elektrische Last aufweisen, beispielsweise eine Heizung für die Garraumatmosphäre, einen Mikrowellengenerator, einen Lüfter, einen Dampferzeuger, einen Antriebsmotor für einen Tiegel oder eine Heizvorrichtung mit wenigstens einem Heizbereich für eine Garfläche. Hieraus ergibt sich eine hohe nominelle Anschlussleistung des Gargeräts, die der Summe der einzelnen maximalen Leistungen der elektrischen Lasten entspricht. Dies wird auch als Bruttoleistung bezeichnet. Üblicherweise sind die Gargeräte jedoch hinsichtlich ihrer Anschlussleistung derart ausgelegt, dass die Nennleistung, also die voraussichtlich tatsächlich aufgenommene Leistung, unterhalb der Bruttoleistung liegt. Es wird bei der Auslegung der Anschlussleistung davon ausgegangen, dass niemals alle elektrischen Lasten gleichzeitig eingeschaltet sind, sodass die Bruttoleistung nicht benötigt wird. Aufgrund dessen können die Anschluss- bzw. Installationsbedingungen einfach gehalten werden, sodass sich die Gargeräte an einen herkömmlichen 3-Phasen-Stromanschluss anschließen lassen.

Üblicherweise sind die elektrischen Lasten fest mit einer bestimmten Phase der Stromversorgung bzw. des Stromanschlusses verbunden, worüber die elektrischen Lasten versorgt werden. Beispielsweise sind der Dampferzeuger und der Mikrowellengenerator fest mit einer ersten Phase verbunden, wohingegen der Lüfter fest mit einer zweiten Phase und die Garraumheizung fest mit einer dritten Phase der 3-Phasen-Stromversorgung verbunden sind. Daraus ergibt sich, dass die elektrischen Lasten stets mit derselben Phase verbunden werden, wenn sie eingeschaltet werden.

Typischerweise werden die elektrischen Lasten den Phasen derart fest zugeordnet, dass sich im Betrieb des Gargeräts eine möglichst gleich verteilte Phasenbelastung ergibt, wenn die elektrischen Lasten der vermutlich am häufigsten verwendeten Garprogramme gleichzeitig eingeschaltet sind. Aufgrund der unterschiedlichen Garprogramme, die mittlerweile bei Gargeräten im Groß- bzw. Profiküchenbereich vorgesehen sind, kann es jedoch vorkommen, dass alle elektrischen Lasten eingeschaltet sind, die mit einer einzigen Phase verbunden sind, wohingegen die anderen Phasen nicht belastet werden. Dies erfordert entweder eine höhere Anschlussleistung, wodurch die Anschlussbedingungen komplizierter sind, oder die Leistungsaufnahmen der elektrischen Lasten werden von der Steuerung begrenzt, um die maximale Stromaufnahme pro Phase nicht zu überschreiten. Dies kann jedoch Auswirkungen auf das Leistungspotenzial des Gargeräts und das Garergebnis haben.

Die DE 10 2011 078 047 A1 zeigt eine Vorrichtung zur Steuerung der Belastung der Phasen eines dreiphasigen Energienetzes, wobei die Vorrichtung mit einem Wasserkocher gekoppelt sein kann.

Die EP 0 980 195 A2 zeigt ein Haushaltsgerät mit einem Mehrphasenanschluss, bei dem mehrere elektronische Leistungsverbraucher fest mit einer entsprechenden Phase gekoppelt sind.

Aus der WO 2015/007886 A1 sowie der EP 2 665 346 A2 sind jeweils eine Vorrichtung sowie ein Verfahren zur Phasenwahl für eine Leuchte bzw. ein Leuchtsystem bekannt.

Die Aufgabe der Erfindung ist es, ein Verfahren zur Steuerung eines Gargeräts sowie ein Gargerät bereitzustellen, mit denen eine möglichst geringe Anschlussleistung bei gleichem Leistungspotenzial erreicht wird.

Die Aufgabe wird erfindungsgemäß durch ein Verfahren zur Steuerung eines Gargeräts gelöst, das wenigstens eine elektrische Last und eine Steuerung aufweist, wobei die elektrische Last variabel mit wenigstens einer von mehreren Phasen eines Stromanschlusses verbunden wird, wobei die Phase aus den mehreren Phasen ausgewählt wird, wobei der künftige Strombedarf der elektrischen Last durch die Steuerung erfasst wird und die elektrische Last in Abhängigkeit von ihrem künftigen Strombedarf mit einer ausgewählten der mehreren Phasen des Stromanschlusses verbunden wird.

Die Aufgabe wird ferner erfindungsgemäß durch ein Gargerät gelöst, mit wenigstens einer elektrischen Last, einer Steuerung und einer variablen Phasenschalteinrichtung, die die elektrische Last mit wenigstens einer von mehreren Phasen eines Stromanschlusses variabel schaltet, wobei die Phase aus den mehreren Phasen ausgewählt ist, und wobei die Steuerung eingerichtet ist, den künftigen Strombedarf der elektrischen Last zu erfassen und die elektrische Last über die variable Phasenschalteinrichtung in Abhängigkeit von ihrem künftigen Strombedarf mit einer ausgewählten der mehreren Phasen des Stromanschlusses zu verbinden.

Der Grundgedanke der Erfindung ist es, dass stets eine möglichst symmetrische Phasenbelastung erreicht wird, die unabhängig von den eingeschalteten elektrischen Lasten ist. Das heißt, dass die elektrischen Lasten möglichst gleichmäßig auf die Phasen verteilt werden, sodass die einzelnen Phasen jeweils annähernd gleich stark belastet sind. Hierzu sind die elektrischen Lasten nicht einer einzigen bestimmten Phase fest zugeordnet, sondern können variabel einer oder auch mehreren Phasen des Stromanschlusses aufgeschaltet werden. "Variabel" bedeutet, dass die Last entweder vor dem Einschalten einer bestimmten Phase zugeordnet wird oder während des Betriebs von einer auf eine andere Phase geschaltet wird. Hierbei wird eine Auswahl von der Steuerung getroffen, mit welcher der zur Verfügung stehenden Phasen die elektrische Last verbunden wird. Entsprechend wird eine unsymmetrische Phasenbelastung grundsätzlich vermieden, die eine reduzierte Leistung von zumindest einer der eingeschalteten elektrischen Lasten zur Folge haben könnte. Da die Phasenbelastung stets möglichst symmetrisch ist, kann die tatsächliche Anschlussleistung verhältnismäßig gering gewählt werden, da die maximale Stromaufnahme einer einzelnen Phase so spät wie möglich erreicht wird. Das Leistungspotenzial der elektrischen Lasten muss entsprechend nicht reduziert werden. Es ergeben sich somit weder Einschränkungen hinsichtlich des Leistungspotenzials noch erschwerte Anschluss- bzw. Installationsbedingungen.

Es kann vorgesehen sein, dass die variable Phasenschalteinrichtung selbst eine Steuerung umfasst, die von der Steuerung des Gargeräts angesteuert wird, oder ohne eigene Steuerung ausgebildet ist, sodass die Steuerung des Gargeräts die Phasenschalteinrichtung entsprechend ansteuert.

Die Steuerung greift beispielsweise auf ein laufendes Garprogramm zu, um festzustellen, ob demnächst eine elektrische Last zugeschaltet bzw. abgeschaltet wird, was eine Änderung des künftigen Strombedarfs dieser elektrischen Last zur Folge hätte. Ferner können auch Leistungssteigerungen bzw. -reduktionen einer bereits eingeschalteten elektrischen Last erfasst werden. Dementsprechend kann die Steuerung den künftigen Strombedarf jeder elektrischen Last und entsprechend des gesamten Gargeräts erfassen. Generell ist es somit möglich, dass die Steuerung auf zukünftige Änderungen in der Leistungsaufnahme rechtzeitig reagieren kann.

Insbesondere wird die elektrische Last in Abhängigkeit von ihrem künftigen Strombedarf mit einer ausgewählten der mehreren Phasen des Stromanschlusses verbunden. Die Auswahl der einen aus den mehreren Phasen findet demnach aufgrund des künftigen Strombedarfs der elektrischen Last statt. Die Steuerung erkennt, welche Leistungsaufnahme eine elektrische Last demnächst benötigt, und wählt dementsprechend eine der mehreren Phasen aus, sodass die Phasen möglichst symmetrisch belastet sind. Sollte eine elektrische Last demnächst einen höheren Strombedarf haben, so kann die Steuerung diese Last auf die Phase des Stromanschlusses schalten, an der die wenigsten elektrischen Lasten anliegen.

Gemäß einem weiteren Aspekt wird die aktuelle Phasenbelastung der jeweiligen Phasen des Stromanschlusses durch die Steuerung erfasst. Die Steuerung kann somit erkennen, welche der Phasen im aktuellen Zustand am wenigsten belastet ist. Demnach ist nicht nur eine Aussage über die zukünftige Belastung möglich, sondern auch über die aktuelle Belastung. Darüber hinaus kann eine qualitative Aussage bezüglich der Phasenbelastung getroffen werden, das heißt, wie hoch die Belastung der Phase tatsächlich ist, da nicht nur erfasst wird, wie viele elektrische Lasten mit der einen Phase verbunden sind. Es wird also ein konkreter Wert der Phasenbelastung erfasst.

Insbesondere wird eine elektrische Last, die zugeschaltet wird oder einen höheren künftigen Strombedarf hat, mit der Phase des Stromanschlusses verbunden, die die geringste aktuelle Phasenbelastung hat. Hierdurch wird die elektrische Gesamtbelastung möglichst symmetrisch auf die einzelnen Phasen verteilt, sodass mehrere elektrische Lasten gleichzeitig betrieben werden können, wobei ihr Leistungspotenzial nicht eingeschränkt werden muss.

Ein weiterer Aspekt sieht vor, dass die Zuordnung der elektrischen Last zu einer Phase des Stromanschlusses taktweise durch die Steuerung überprüft und gegebenenfalls verändert wird. Die Zuordnung der elektrischen Last zu einer Phase erfolgt somit nicht nur beim Einschalten, sondern auch im laufenden Betrieb, sodass die symmetrische Belastungsverteilung der Phasen dauerhaft gewährleistet ist. Die Steuerung überprüft in vorgesehenen Zeitabständen, ob die Zuordnung der elektrischen Lasten zu den Phasen und die aktuelle sowie zukünftige Phasenbelastungen eine symmetrische Verteilung zur Folge haben. Sollte die Steuerung dabei feststellen, dass eine unsymmetrische Phasenbelastung vorliegt oder demnächst vorliegen wird, so kann die Steuerung wenigstens eine der elektrischen Lasten auf eine andere Phase des Stromanschlusses legen, um die Phasenbelastungen symmetrischer zu gestalten.

Gemäß einer Ausführungsform kann vorgesehen sein, dass die elektrische Last variabel mit zwei Phasen des Stromanschlusses verbunden wird. Dies ist dann von Vorteil, wenn eine elektrische Last einen Strombedarf hat, der so hoch ist, dass eine unsymmetrische Belastungsverteilung die Folge wäre, wenn diese elektrische Last lediglich mit einer Phase verbunden wird.

Gemäß einer weiteren Ausführungsform sind zwei elektrische Lasten vorgesehen, die beide variabel mit derselben Phase des Stromanschlusses verbunden werden. Dies ist dann von Vorteil, wenn zwei elektrische Lasten mit einem geringeren Strombedarf vorgesehen sind, wohingegen zwei weitere Lasten einen hohen Strombedarf aufweisen, sodass eine symmetrische Belastungsverteilung möglich ist. Die beiden elektrischen Lasten können auch Teil einer übergeordneten Baugruppe sein, beispielsweise zwei Heizkreise eines Heizelements, die vorzugsweise derselben Phase zugeordnet werden sollten, sofern dies die symmetrische Verteilung nicht stört.

Es findet demnach keine feste Zuordnung der elektrischen Last(en) zu einer oder mehreren Phase(n) statt, da die elektrische(n) Last(en) je nach Belastung der einzelnen Phasen des Stromanschlusses variabel zwischen den Phasen hin- bzw. hergeschaltet werden, um die Belastungen stets auf die einzelnen Phasen symmetrisch zu verteilen. Dies trifft insbesondere auf leistungsintensive elektrische Lasten zu, beispielsweise Heizelemente oder ähnliches. Eine elektrische Last, die einen geringen Stromverbrauch hat (beispielsweise wie eine Steuerung), kann dagegen einer Phase fest zugeordnet sein.

Anders ausgedrückt bedeutet dies, dass die elektrische(n) Last(en) mit sämtlichen Phasen des Stromanschlusses variabel verbunden ist bzw. sind, da die elektrische(n) Last(en) je nach aktueller und/oder künftiger Belastung der Phasen mit einer ersten Phase oder einer zweiten Phase verbunden wird bzw. werden.

Die elektrische Last des Gargeräts kann zwei oder mehr Phasen fest zugeordnet sein, wobei die Steuerung wenigstens eine der fest zugeordneten Phasen auswählt, um die elektrische Last variabel mit wenigstens einer der zugeordneten Phasen des Stromanschlusses zu verbinden. Das variable Verbinden kann mittels einer Steuerung erfolgen, die die elektrische Last über die variable Phasenschalteinrichtung mit wenigstens einer der zugeordneten Phasen verbindet. Die elektrische Last wird demnach ebenfalls flexibel mit wenigstens einer der mehreren Phasen verbunden, wobei die Flexibilität leicht eingeschränkt ist, da nur zwischen den fest zugeordneten Phasen eine Auswahl stattfindet. Bei der elektrischen Last kann es sich insbesondere um ein Heizelement handeln, das zwei oder mehr Heizkreise aufweist.

Die Phasenschalteinrichtung kann über wenigstens eine Schnittstelle mit sämtlichen Phasen des Stromanschlusses verbunden sein. Hierdurch ist es möglich, dass die mit der Phasenschalteinrichtung verbundenen elektrischen Lasten variabel zwischen sämtlichen Phasen des Stromanschlusses geschaltet werden können, da über die Schnittstelle ein Wechsel der zugeordneten Phase erfolgt. Insbesondere können drei Schnittstellen, also eine pro Phase, vorgesehen sein.

Bei der elektrischen Last kann es sich um eine Heizvorrichtung handeln, die wenigstens zwei Heizbereiche hat, wobei die Heizbereiche zwei Heizzonen eines Heizelements sind oder durch zwei separate Heizelemente ausgebildet sind. Beispielsweise kann es sich hierbei um eine Heizvorrichtung handeln, die zwei Garflächen zugeordnet ist. Die Heizvorrichtung kann auch durch ein einziges Heizelement gebildet sein, das einen Hauptheizkreis sowie einen Hilfsheizkreis umfasst. Der Hilfsheizkreis kann beispielsweise optional zugeschaltet werden, sofern ein schnelles Aufheizen erwünscht ist.

Die beiden Heizzonen eines Heizelements können auch jeweils fest mit einer Phase verbunden sein, wobei lediglich die Heizzone des einen Heizelements von der Steuerung angesteuert wird, die der Phase mit der geringeren Belastung zugeordnet ist. Somit ist auch eine variable Zuschaltung der als Heizelement ausgebildeten elektrischen Last gegeben. Diese Möglichkeit ist insbesondere dann von Bedeutung, wenn die beiden Heizzonen des einen Heizelements gleich stark ausgebildet sind.

Bei der Phasenschalteinrichtung kann es sich um ein intelligentes "Solid State Relay" (SSR) bzw. Halbleiterrelais, einen Schützschalter, ein Schaltsystem, ein intelligentes Relais oder mehrere, hintereinandergeschaltete (Halbleiter-) Relais handeln. Die Phasenschalteinrichtung schaltet demnach nicht nur einen hohen Leistungsstrom durch bzw. sperrt diesen, sondern ist mit allen Phasen des Stromanschlusses verbunden, sodass jede beliebige Phase mit der elektrischen Last geschaltet werden kann.

Generell ist es mit dem Verfahren sowie mit dem Gargerät möglich, die elektrischen Lasten eines Gargeräts automatisiert mit der niedrigsten belasteten Phase des Stromanschlusses zu verbinden, wodurch eine ausgeglichene Phasenbelastung des Stromanschlusses erreicht wird. Aufgrund des intelligenten Leistungsmanagements müssen demnach keine Leistungseinbußen hingenommen werden, wie dies der Fall wäre, wenn gleichzeitig mehrere elektrische Lasten betrieben werden, die fest mit einer vorbestimmten Phase verbunden sind.

Ein Heizelement für ein Gargerät kann wenigstens zwei Heizzonen aufweisen, die jeweils einen eigenen Anschluss für eine Phase eines Stromanschlusses haben. Die Heizzonen können als Heizkreise ausgebildet sein, die die gleiche Stärke aufweisen oder eine unterschiedliche Stärke haben, sodass beispielsweise ein Haupt- und ein Hilfskreis ausgebildet sind. Die Heizzonen können zudem in dem einen Heizelement neben- oder übereinander angeordnet sein. Da jede der Heizzonen einen eigenen Anschluss aufweist, kann das eine Heizelement mit mehreren Phasen des Stromanschlusses gleichzeitig verbunden sein, wobei die Zuordnung der Heizzonen zu den Phasen fest oder variabel ist.

Bei der festen Zuordnung der Phasen kann eine Steuerung und/oder eine Phasenschalteinrichtung eines Gargeräts jeweils eine einzelne Heizzone mit der ihr fest zugeordneten Phase verbinden, insbesondere in Abhängigkeit der Belastung der Phasen des Stromanschlusses. Dies bedeutet, dass das Heizelement von der Steuerung flexibel mit einer der mehreren fest zugeordneten Phasen verbunden werden kann.

Alternativ können die einzelnen Heizzonen flexibel zwischen allen Phasen des Stromanschlusses über die Steuerung und/oder die Phasenschalteinrichtung des Gargeräts flexibel geschaltet werden.

Die Zuordnung des Heizelements ist demnach immer flexibel, unabhängig davon ob die einzelnen Heizzonen des Heizelements fest oder variabel einer Phase zugeordnet sind.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Darstellung eines erfindungsgemäßen Gargeräts,
- Figur 2 eine schematische Darstellung einer beim Gargerät gemäß Figur 1 verwendeten Phasenschalteinrichtung,
- Figur 3 eine schematische Darstellung einer beim Gargerät gemäß Figur 1 verwendeten als Heizvorrichtung ausgebildeten elektrischen Last, und
- Figur 4 ein Flussdiagramm, das das erfindungsgemäße Verfahren darstellt.

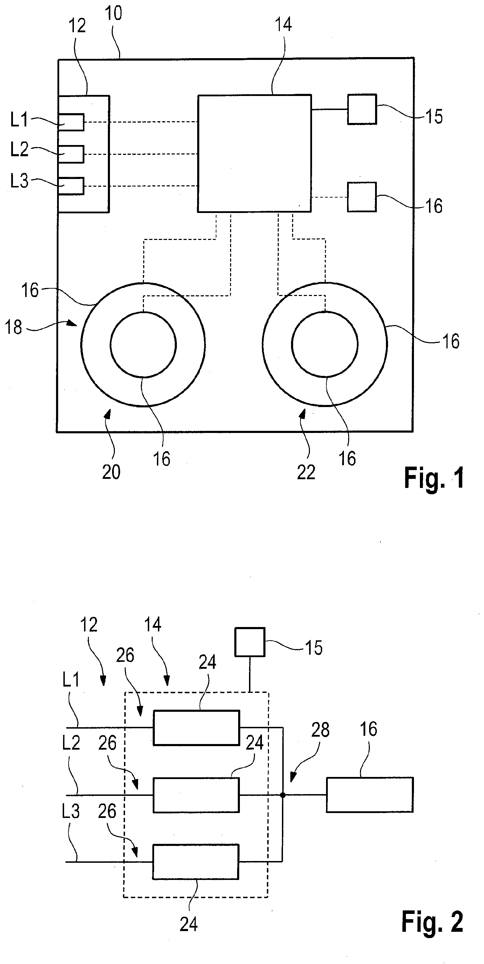

In Figur 1 ist schematisch ein Gargerät 10 gezeigt, das einen Stromanschluss 12 für drei Phasen L1, L2, L3 aufweist. Bei dem Stromanschluss 12 handelt es sich somit um einen herkömmlichen 3-Phasen-Stromanschluss bzw. einen Anschluss für Dreiphasenwechselstrom.

In der gezeigten Ausführungsform umfasst das Gargerät 10 eine variable Phasenschalteinrichtung 14, eine mit der Phasenschalteinrichtung 14 verbundene Steuerung 15 sowie fünf elektrische Lasten 16. Vier der elektrischen Lasten 16 sind Teil einer Heizvorrichtung 18, wohingegen die fünfte elektrische Last 16 beispielsweise ein elektrischer Motor sein kann, der zum Anheben eines Tiegels oder Verstellen eines Deckels verwendet wird. Generell kann das Gargerät 10 weitere elektrische Lasten umfassen, die in den Figuren nicht dargestellt sind, beispielsweise eine Mikrowellenquelle, einen Dampfgenerator, einen Lüfter oder eine Heizung für die Garraumatmosphäre.

Sofern die weiteren elektrischen Lasten einen hohen Stromverbrauch aufweisen, können sie in analoger Weise zu den gezeigten elektrischen Lasten 16 geschaltet sein, also über die variable Phasenschalteinrichtung 14. Sofern es sich um elektrische Lasten mit einem geringen Stromverbrauch handelt, können diese fest einer Phase zugeordnet sein.

Die Heizvorrichtung 18 weist in der gezeigten Ausführungsform zwei Heizbereiche 20, 22 auf, die hier nicht dargestellten Garflächen des Gargeräts 10 zugeordnet sind. Über die Heizbereiche 20, 22 können die Garflächen beheizt werden.

Die variable Phasenschalteinrichtung 14 ist in Figur 2 detaillierter gemäß einer bestimmten Ausführungsform gezeigt, in der die Phasenschalteinrichtung 14 durch drei Schaltelemente 24 gebildet ist, die jeweils einer Phase L1, L2, L3 des Stromanschlusses 12 zugeordnet sind. Die Schaltelemente 24 stellen dabei jeweils eine Schnittstelle 26 der Phasenschalteinrichtung 14 dar, über die die Phasenschalteinrichtung 14 mit dem Stromanschluss 12, insbesondere den jeweiligen Phasen L1 bis L3, verbunden ist.

Als Schaltelemente 24 kommen "Solid State Relay" (SSR) bzw. Halbleiterrelais, Schützschalter und/oder intelligente Relais in Frage. Generell kann die variable Phasenschalteinrichtung 14 Halbleiterrelais bzw. SSR, Schützschalter, ein Schaltsystem, intelligente Relais oder mehrere, hintereinandergeschaltete (Halbleiter-) Relais umfassen.

Die variable Phasenschalteinrichtung 14 ist in der gezeigten Ausführungsform lediglich durch die Schaltelemente 24 gebildet, die von der Steuerung 15 angesteuert werden. Alternativ kann die variable Phasenschalteinrichtung 14 selbst eine Steuerung aufweisen, die mit der Steuerung 15 des Gargeräts 10 kommuniziert.

Ferner weist die Phasenschalteinrichtung 14 eine Ausgangsschnittstelle 28 auf, über die die wenigstens eine elektrische Last 16 mit der Phasenschalteinrichtung 14 verbunden ist.

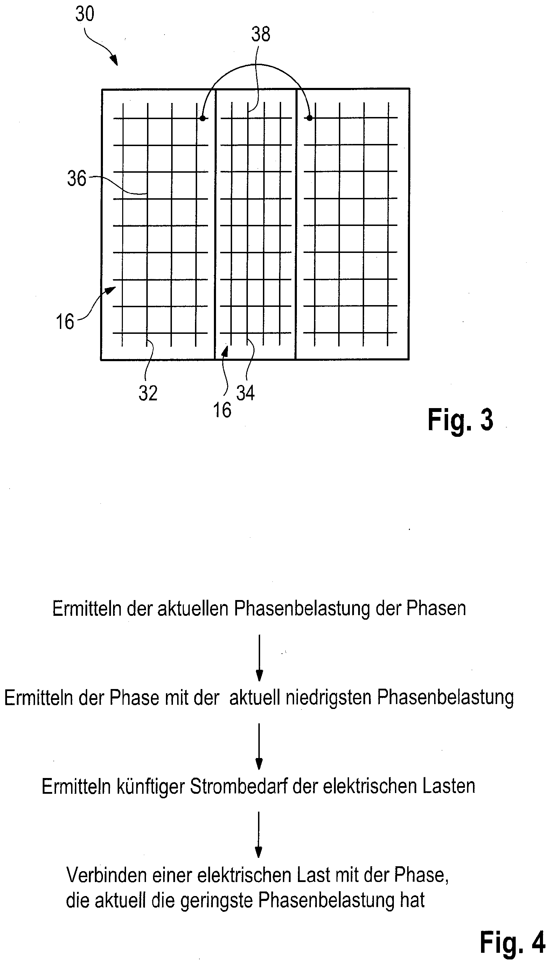

Die elektrische Last 16 kann über die Phasenschalteinrichtung 14 in variabler Weise mit einer ausgewählten Phase der Phasen L1 bis L3 des Stromanschlusses 12 verbunden werden. Dies wird nachfolgend anhand der Figuren 1, 2 und 4 näher erläutert, wobei Figur 4 ein Flussdiagramm des ablaufenden Verfahrens zeigt.

Die Steuerung 15 des Gargeräts 10 hat Zugriff auf einen Speicher, in dem die durch das Gargerät 10 ausführbaren Garprogramme hinterlegt sind. Aufgrund dieses Zugriffes kann die Steuerung 15 ermitteln, wie der künftige Strombedarf der elektrischen Lasten 16 des Gargeräts 10 sein wird.

Im Speicher sind unter anderem die Schaltzeiten der elektrischen Lasten 16 in Abhängigkeit vom Garfortschritt sowie die entsprechenden Stromaufnahmen der elektrischen Lasten 16 hinterlegt. Anhand des Garfortschritts sowie den hinterlegten Werten kann die Steuerung 15 ermitteln, ob und welche elektrische Last 16 zugeschaltet wird bzw. ob sich der Strombedarf einer aktuell eingeschalteten elektrischen Last 16 verändern wird.

Die Steuerung 15 ist ferner mit der Phasenschalteinrichtung 14 verbunden und hat Zugriff auf die daran angeschlossenen Phasen L1 bis L3 des Stromanschlusses 12, sodass die Steuerung 15 eine aktuelle Phasenbelastung der jeweiligen Phasen L1 bis L3 des Stromanschlusses 12 ermitteln kann. Dies bedeutet, dass die Steuerung 15 erkennt, wie groß die aktuelle tatsächliche Belastung der Phasen L1 bis L3 ist. Hierbei ermittelt die Steuerung 15 den tatsächlichen Stromwert, der über die entsprechenden Phasen L1 bis L3 läuft.

Hierbei kann die Steuerung 15 insbesondere ermitteln, welche der Phasen L1 bis L3 die aktuell niedrigste Phasenbelastung aufweist, um diese Phase für eine elektrische Last 16 vorzusehen, die demnächst zugeschaltet oder einen höheren Strombedarf aufweisen wird.

In Abhängigkeit vom ermittelten künftigen Strombedarf der elektrischen Lasten 16 steuert die Steuerung 15 die variable Phasenschalteinrichtung 14 dann derart an, dass beispielsweise eine neu zugeschaltete elektrische Last 16 an die zuvor ermittelte Phase L1 bis L3 angelegt wird, die aktuell die geringste Phasenbelastung aufweist. Hierdurch ist sichergestellt, dass die elektrische Last 16 nicht an eine Phase L1 bis L3 angelegt wird, die bereits eine hohe bzw. die höchste Belastung aufweist, wodurch diese Phase L1 bis L3 zu stark belastet werden könnte. Im Extremfall könnte dies zur Folge haben, dass die elektrischen Lasten 16 nur mit einem eingeschränkten Leistungspotenzial betrieben werden könnten.

Die Steuerung 15 steuert die Phasenschalteinrichtung 14 so an, dass eine neu zugeschaltete elektrische Last 16 variabel so mit einer Phase L1 bis L3 verbunden wird, dass eine möglichst symmetrische Phasenbelastung erfolgt. Üblicherweise wird die Steuerung 15 dabei die Phase auswählen, die aktuell am geringsten belastet ist.

Alternativ oder ergänzend erkennt die Steuerung 15, dass eine bereits eingeschaltete elektrische Last 16 zukünftig einen höheren Strombedarf aufweist, der zu einer unsymmetrischen Phasenbelastung der Phasen L1 bis L3 führen würde. Aufgrund dessen steuert die Steuerung 15 die variable Phasenschalteinrichtung 14 derart an, dass die elektrische Last 16, die zukünftig einen höheren Strombedarf hat, auf eine Phase L1 bis L3 des Stromanschlusses 12 gelegt wird, die aktuell die geringste Phasenbelastung hat. Hierdurch wird sichergestellt, dass trotz der Erhöhung des Strombedarfs der elektrischen Last 16 eine möglichst gleichmäßig verteilte Phasenbelastung der Phasen L1 bis L3 vorliegt.

Generell berücksichtigt die Steuerung 15 bei der Ansteuerung der Phasenschalteinrichtung 14 insbesondere die künftigen Strombedarfe der weiteren eingeschalteten elektrischen Lasten 16 bzw. der zukünftig hinzugefügten elektrischen Lasten 16.

Es kann ferner vorgesehen sein, dass die Steuerung 15 die aktuelle Phasenbelastung sowie die Verteilung der elektrischen Lasten 16 auf die einzelnen Phasen L1 bis L3 taktweise überprüft und gegebenenfalls Anpassungen vornimmt, was die Zuordnung der elektrischen Lasten 16 zu den einzelnen Phasen L1 bis L3 betrifft. Hierdurch ist sichergestellt, dass eine regelmäßige Überwachung der Phasenbelastungen stattfindet und die elektrischen Lasten 16 gegebenenfalls hinsichtlich der Zuordnung zu den Phasen L1 bis L3 umverteilt werden.

Sofern eine elektrische Last 16 einen extrem hohen Strombedarf aufweist, kann die Steuerung 15 die Phasenschalteinrichtung 14 derart ansteuern, dass die elektrische Last 16 stets mit zwei Phasen L1 bis L3 verbunden ist, um die Belastung einer einzelnen Phase L1 bis L3 zu senken. Die beiden der Phasen L1 bis L3, mit denen die elektrische Last 16 verbunden ist, sind jedoch nicht fest gewählt, sondern werden regelmäßig von der Steuerung 15 hinsichtlich ihrer Phasenbelastung überprüft und gegebenenfalls wird die Zuordnung der elektrischen Last 16 zu den Phasen L1 bis L3 geändert.

Je nach Auslastung der Phasen L1 bis L3 sowie der elektrischen Lasten 16, die eingeschaltet sind, kann es zweckmäßig sein, dass mehrere elektrische Lasten 16 ein und derselben Phase L1 bis L3 zugeordnet werden. Dies ist insbesondere dann von Vorteil, wenn zwei elektrische Lasten 16 eingeschaltet sind, die jeweils einen geringen Strombedarf aufweisen, wenn zwei weitere elektrische Lasten 16 mit einem hohen Strombedarf jeweils einer anderen Phase L1 bis L3 zugeordnet sind.

Darüber hinaus kann die variable Zuordnung von zwei elektrischen Lasten 16 zu einer der mehreren Phasen L1 bis L3 sinnvoll sein, wenn die beiden elektrischen Lasten 16 Teile einer gemeinsamen Baugruppe sind, beispielsweise zwei Heizkreise eines Heizelements. Ein solches Heizelement 30 ist beispielsweise in Figur 3 schematisch gezeigt.

Das Heizelement 30 weist zwei separate Heizzonen 32, 34 auf, die auch als Heizkreise bezeichnet werden können. Die Heizzonen 32, 34 können ein Hauptheizkreis 36 sowie ein Hilfsheizkreis 38 sein, wobei der Hilfsheizkreis 34 zugeschaltet wird, wenn eine starke Heizfunktion des Heizelements 30 benötigt wird. Die beiden Heizzonen 32, 34 stellen separate elektrische Lasten 16 dar, die von der Phasenschalteinrichtung 14 entsprechend auf die Phasen L1 bis L3 verteilt werden.

Die Heizkreise 36, 38 können unabhängig voneinander über die variable Phasenschalteinrichtung 14 mit unterschiedlichen Phasen L1 bis L3 des Stromanschlusses 12 verbunden werden. Alternativ kann vorgesehen sein, dass die beiden Heizkreise 36, 38 stets variabel mit einer gleichen ausgewählten Phase L1 bis L3 des Stromanschlusses 12 verbunden werden, da sie Teil des gemeinsamen Heizelements 30 sind. Die beiden Heizkreise 36, 38 sind dennoch variabel einer ausgewählten Phase der Phasen L1 bis L3 zugeordnet, wobei die Zuordnung regelmäßig überwacht wird, um eine symmetrische Phasenbelastung aller Phasen L1 bis L3 zu garantieren.

In einer weiteren Alternative können die Heizkreise 36, 38 fest mit unterschiedlichen Phasen verbunden sein und die Steuerung 15 steuert nur den Heizkreis 36, 38 des Heizelements 30 an, der der Phase zugeordnet ist, die weniger stark belastet ist. Dies ist insbesondere dann vorteilhaft, wenn die beiden Heizkreise 36, 38 gleich stark ausgebildet sind. Das eine Heizelement 30 stellt demnach die elektrische Last dar, die variabel zugeschaltet werden kann. Ferner kann da eine Heizelement 30 auch mehr als zwei Heizkreise aufweisen.

In der gezeigten Ausführungsform sind die Heizkreise 36, 38 nebeneinanderliegend vorgesehen, wobei der Hauptheizkreis 36 den Hilfsheizkreis 38 zumindest teilweise umgibt. Alternativ können die beiden Heizkreise 36, 38, die einen unterschiedlichen elektrischen Widerstand aufweisen, auch übereinander angeordnet sein.

Die in Figur 1 gezeigten Heizbereiche 20, 22 können jeweils durch zwei separate Heizelemente oder durch zwei Heizkreise eines Heizelements ausgebildet sein, wie dies in Figur 3 gezeigt ist.

Generell ist es mit dem Gargerät 10 sowie dem Verfahren möglich, dass die elektrischen Lasten 16 variabel mit allen elektrischen Phasen L1 bis L3 des Stromanschlusses 12 verbunden werden können, wobei automatisch die Phase L1 bis L3 aus den vorhandenen Phasen des Stromanschlusses 12 ausgewählt wird, die die niedrigste Belastung hat, um eine möglichst gleichmäßige Phasenbelastung der einzelnen Phasen L1 bis L3 zu erhalten. Die Phasenzuordnung der elektrischen Lasten 16 erfolgt demnach flexibel, da die elektrische Last, insbesondere das Heizelement 30 mit zwei Heizkreisen 36, 38, immer so mit dem Stromanschluss 12 verbunden wird, dass eine ausgeglichene Phasenbelastung vorliegt.

Beispielsweise können drei Heizelemente 30 vorgesehen sein, die jeweils zwei Heizkreise 36, 38 aufweisen, wobei das erste Heizelement 30 mit den Phasen L1 und L2 fest verbunden ist, das zweite Heizelement 30 mit den Phasen L1 und L2 fest verbunden ist und das dritte Heizelement 30 mit den Phasen L2 und L3 fest verbunden ist.

Beim im Wesentlichen gleichen Aufheizen aller drei Heizelemente 30 kann die Steuerung 15 die Heizelemente 30 dann derart ansteuern, dass der beim ersten Heizelement 30 mit der Phase L1 fest verbundene Heizkreis, der beim zweiten Heizelement 30 mit der Phase L2 fest verbundene Heizkreis und der beim dritten Heizelement 30 mit der Phase L3 fest verbundene Heizkreis angesteuert werden. Demnach ergibt sich eine variable Ansteuerung der einzelnen Heizelemente 30, wodurch insgesamt eine ausgeglichene Phasenbelastung möglich ist.

In einem weiteren Beispiel, in dem nur das erste Heizelement 30 und das dritte Heizelement 30 heizen müssen, wobei das dritte Heizelement 30 einen größeren Heizbedarf aufweist, kann die Steuerung 15 das erste Heizelement an die Phase L1 anlegen und das dritte Heizelement 30 an die zweite und dritte Phase L2, L3. Auch hierdurch wird die Belastung der einzelnen Phasen ausgeglichen.

## Patentansprüche

1. Verfahren zur Steuerung eines Gargeräts (10), das wenigstens eine elektrische Last (16) und eine Steuerung (15) aufweist, wobei die elektrische Last (16) variabel mit wenigstens einer von mehreren Phasen (L1, L2, L3) eines Stromanschlusses (12) verbunden wird, wobei die Phase (L1, L2, L3) aus den mehreren Phasen (L1, L2, L3) ausgewählt wird, **dadurch gekennzeichnet, dass** der künftige Strombedarf der elektrischen Last (16) durch die Steuerung (15) erfasst wird und dass die elektrische Last (16) in Abhängigkeit von ihrem künftigen Strombedarf mit einer ausgewählten der mehreren Phasen (L1, L2, L3) des Stromanschlusses (12) verbunden wird.

2. Verfahren nach Anspruch 1, **dadurch gekennzeichnet, dass** mehrere elektrischen Lasten (16) möglichst gleichmäßig auf die Phasen (L1, L2, L3) verteilt werden, sodass die einzelnen Phasen (L1, L2, L3) jeweils annähernd gleich stark belastet sind.

3. Verfahren nach einem der vorhergehenden Ansprüche, **dadurch gekennzeichnet, dass** die aktuelle Phasenbelastung der jeweiligen Phasen (L1, L2, L3) des Stromanschlusses (12) durch die Steuerung (15) erfasst wird.

4. Verfahren nach Anspruch 3, **dadurch gekennzeichnet, dass** eine elektrische Last (16), die zugeschaltet wird oder einen höheren künftigen Strombedarf hat, mit der Phase (L1, L2, L3) des Stromanschlusses (12) verbunden wird, die die geringste aktuelle Phasenbelastung hat.

5. Verfahren nach einem der vorhergehenden Ansprüche, **dadurch gekennzeichnet, dass** die Zuordnung der elektrischen Last (16) zu einer Phase (L1, L2, L3) des Stromanschlusses (12) taktweise durch die Steuerung (15) überprüft und gegebenenfalls verändert wird.

6. Verfahren nach einem der vorhergehenden Ansprüche, **dadurch gekennzeichnet, dass** die elektrische Last (16) variabel mit zwei Phasen (L1, L2, L3) des Stromanschlusses (12) verbunden wird.

7. Verfahren nach einem der vorhergehenden Ansprüche, **dadurch gekennzeichnet, dass** zwei elektrische Lasten (16) vorgesehen sind, die beide variabel mit derselben Phase (L1, L2, L3) des Stromanschlusses (12) verbunden werden.

8. Verfahren nach einem der vorhergehenden Ansprüche, **dadurch gekennzeichnet, dass** die elektrische Last (16) zwei oder mehr Phasen (L1, L2, L3) fest zugeordnet ist, wobei die Steuerung (15) wenigstens eine der fest zugeordneten Phasen (L1, L2, L3) auswählt, um die elektrische Last (16) variabel mit wenigstens einer der zugeordneten Phasen (L1, L2, L3) des Stromanschlusses (12) zu verbinden.

9. Gargerät (10) mit wenigstens einer elektrischen Last (16), einer Steuerung (15) und einer variablen Phasenschalteinrichtung (14), die die elektrische Last (16) mit wenigstens einer von mehreren Phasen (L1, L2, L3) eines Stromanschlusses (12) variabel schaltet, wobei die Phase (L1, L2, L3) aus den mehreren Phasen (L1, L2, L3) ausgewählt ist, **dadurch gekennzeichnet, dass** die Steuerung (15) eingerichtet ist, den künftigen Strombedarf der elektrischen Last (16) zu erfassen und die elektrische Last (16) über die variable Phasenschalteinrichtung (14) in Abhängigkeit von ihrem künftigen Strombedarf mit einer ausgewählten der mehreren Phasen (L1, L2, L3) des Stromanschlusses (12) zu verbinden.

10. Gargerät (10) nach Anspruch 9, **dadurch gekennzeichnet, dass** die Phasenschalteinrichtung (14) über wenigstens eine Schnittstelle (26) mit sämtlichen Phasen (L1, L2, L3) des Stromanschlusses (12) verbunden ist.

11. Gargerät (10) nach Anspruch 9 oder 10, **dadurch gekennzeichnet, dass** die elektrische Last (16) eine Heizvorrichtung (18) ist, die wenigstens zwei Heizbereiche (20, 22) hat, wobei die Heizbereiche (20, 22) zwei Heizzonen (32, 34) eines Heizelements (30) sind oder durch zwei separate Heizelemente ausgebildet sind.

12. Gargerät (10) nach einem der Ansprüche 9 bis 11, **dadurch gekennzeichnet, dass** wenigstens eine elektrische Last (16) zwei oder mehr Phasen (L1, L2, L3) fest zugeordnet ist, wobei die Steuerung (15) die elektrische Last (16) über die variable Phasenschalteinrichtung (14) mit wenigstens einer der zugeordneten Phasen (L1, L2, L3) verbindet.

## Claims

1. A method of controlling a cooking appliance (10) which includes at least one electrical load (16) and a controller (15), the electrical load (16) being variably connected to at least one of a plurality of phases (L1, L2, L3) of a power connection (12), the phase (L1, L2, L3) being selected from among the plurality of phases (L1, L2, L3), **characterized in that** the future power demand of the electrical load (16) is acquired by the controller (15) and **in that**, depending on its future power demand, the electrical load (16) is connected to a selected one of the plurality of phases (L1, L2, L3) of the power connection (12).

2. The method according to claim 1, **characterized in that** a plurality of electrical loads (16) are distributed to the phases (L1, L2, L3) as evenly as possible, so that the individual phases (L1, L2, L3) are each loaded to approximately the same extent.

3. The method according to either of the preceding claims, **characterized in that** the current phase load of the respective phases (L1, L2, L3) of the power connection (12) is acquired by the controller (15).

4. The method according to claim 3, **characterized in that** an electrical load (16) which is being connected or has a higher future power demand is connected to the phase (L1, L2, L3) of the power connection (12) which has the lowest current phase load.

5. The method according to any of the preceding claims, **characterized in that** the allocation of the electrical load (16) to a phase (L1, L2, L3) of the power connection (12) is checked by the controller (15) in cycles and, if required, is changed.

6. The method according to any of the preceding claims, **characterized in that** the electrical load (16) is variably connected to two phases (L1, L2, L3) of the power connection (12).

7. The method according to any of the preceding claims, **characterized in that** two electrical loads (16) are provided, both of which are variably connected to the same phase (L1, L2, L3) of the power connection (12).

8. The method according to any of the preceding claims, **characterized in that** the electrical load (16) is dedicated to two or more phases (L1, L2, L3), the controller (15) selecting at least one of the dedicated phases (L1, L2, L3) to variably connect the electrical load (16) to at least one of the dedicated phases (L1, L2, L3) of the power connection (12).

9. A cooking appliance (10) comprising at least one electrical load (16), a controller (15), and a variable phase switching means (14) which variably switches the electrical load (16) with at least one of a plurality of phases (L1, L2, L3) of a power connection (12), the phase (L1, L2, L3) being selected from among the plurality of phases (L1, L2, L3), **characterized in that** the controller (15) is configured to acquire the future power demand of the electrical load (16) and to connect the electrical load (16), depending on its future power demand, to a selected one of the plurality of phases (L1, L2, L3) of the power connection (12) via the variable phase switching means (14).

10. The cooking appliance (10) according to claim 9, **characterized in that** the phase switching means (14) is connected to all phases (L1, L2, L3) of the power connection (12) via at least one interface (26).

11. The cooking appliance (10) according to claim 9 or 10, **characterized in that** the electrical load (16) is a heating device (18) which has at least two heating areas (20, 22), the heating areas (20, 22) being two heating zones (32, 34) of a heating element (30) or being formed by two separate heating elements.

12. The cooking appliance (10) according to any of claims 9 to 11, **characterized in that** at least one electrical load (16) is dedicated to two or more phases (L1, L2, L3), the controller (15) connecting the electrical load (16) to at least one of the dedicated phases (L1, L2, L3) via the variable phase switching means (14).

## Revendications

1. Procédé de commande d'un appareil de cuisson (10) présentant au moins une charge électrique (16) et une commande (15), la charge électrique (16) étant reliée de manière variable à au moins une phase parmi une pluralité de phases (L1, L2, L3) d'un raccordement électrique (12), la phase (L1, L2, L3) étant choisie parmi la pluralité de phases (L1, L2, L3), **caractérisé en ce que** le futur besoin en électricité de la charge électrique (16) est détecté par la commande (15), et **en ce que** la charge électrique (16) est reliée à une phase choisie parmi la pluralité de phases (L1, L2, L3) du raccordement électrique (12) en fonction de son futur besoin en électricité.

2. Procédé selon la revendication 1, **caractérisé en ce que** plusieurs charges électriques (16) sont réparties aussi uniformément que possible sur les phases (L1, L2, L3), de sorte que les phases individuelles (L1, L2, L3) sont chacune chargées de manière à peu près égale.

3. Procédé selon l'une des revendications précédentes, **caractérisé en ce que** la charge de phase actuelle des phases respectives (L1, L2, L3) du raccordement électrique (12) est détectée par la commande (15).

4. Procédé selon la revendication 3, **caractérisé en ce qu'**une charge électrique (16) qui est mise sous tension ou qui a un besoin futur en électricité plus élevé est reliée à la phase (L1, L2, L3) du raccordement électrique (12) qui présente la charge de phase actuelle la plus faible.

5. Procédé selon l'une des revendications précédentes, **caractérisé en ce que** l'affectation de la charge électrique (16) à une phase (L1, L2, L3) du raccordement électrique (12) est vérifiée de manière cyclique par la commande (15) et est modifiée si nécessaire.

6. Procédé selon l'une des revendications précédentes, **caractérisé en ce que** la charge électrique (16) est reliée de manière variable à deux phases (L1, L2, L3) du raccordement électrique (12).

7. Procédé selon l'une des revendications précédentes, **caractérisé en ce qu'**il est prévu deux charges électriques (16) qui sont toutes deux reliées de manière variable à la même phase (L1, L2, L3) du raccordement électrique (12).

8. Procédé selon l'une des revendications précédentes, **caractérisé en ce que** la charge électrique (16) est affectée de manière fixe à deux phases (L1, L2, L3) ou plus, la commande (15) choisissant au moins l'une des phases (L1, L2, L3) affectées de manière fixe pour relier la charge électrique (16) de manière variable à au moins l'une des phases affectées (L1, L2, L3) du raccordement électrique (12).

9. Appareil de cuisson (10) présentant au moins une charge électrique (16), une commande (15) et un moyen de commutation de phase variable (14) qui commute la charge électrique (16) de manière variable sur au moins l'une parmi une pluralité de phases (L1, L2, L3) d'un raccordement électrique (12), la phase (L1, L2, L3) étant choisie parmi la pluralité de phases (L1, L2, L3), **caractérisé en ce que** la commande (15) est aménagée de manière à détecter le futur besoin en électricité de la charge électrique (16) et à relier la charge électrique (16) à une phase choisie parmi la pluralité de phases (L1, L2, L3) du raccordement électrique (12) par l'intermédiaire du moyen de commutation de phase variable (14).

10. Appareil de cuisson (10) selon la revendication 9, **caractérisé en ce que** le moyen de commutation de phase (14) est relié à toutes les phases (L1, L2, L3) du raccordement électrique (12) par au moins une interface (26).

11. Appareil de cuisson (10) selon la revendication 9 ou 10, **caractérisé en ce que** la charge électrique (16) est un dispositif de chauffage (18) présentant au moins deux régions de chauffage (20, 22), les régions de chauffage (20, 22) étant deux zones de chauffage (32, 34) d'un élément de chauffage (30) ou étant formées par deux éléments de chauffage séparés.

12. Appareil de cuisson (10) selon l'une des revendications 9 à 11, **caractérisé en ce qu'**au moins une charge électrique (16) est affectée de manière fixe à deux phases (L1, L2, L3) ou plus, la commande (15) reliant la charge électrique (16) à au moins l'une des phases affectées (L1, L2, L3) par l'intermédiaire du moyen de commutation de phase variable (14).
